# EUROPÄISCHE PATENTSCHRIFT

(11) **EP 0 551 841 B1**
(45) Veröffentlichungstag und Bekanntmachung des Hinweises auf die Patenterteilung: **02.04.1997**
(21) Anmeldenummer: 93100252.1
(22) Anmeldetag: 09.01.1993
(51) Int. Cl.: B60J 7/05

(54) **Sperrvorrichtung für Schiebehebedächer für Kraftfahrzeuge**
Locking device for sliding-lifting roofs for motor vehicles
Dispositif de verrouillage pour toits coulissants et relevables pour véhicules automobiles

(30) Priorität: 14.01.1992 DE 4200724
(43) Veröffentlichungstag der Anmeldung: 21.07.1993
(73) Patentinhaber: Rockwell International GmbH, 60314 Frankfurt (DE)
(72) Erfinder: Schlapp, Albert, W-6072 Dreieich (DE)
(74) Vertreter: Oppermann, Ewald, Dipl.-Ing.

(56) Entgegenhaltungen:
- EP-A- 0 134 042
- DE-A- 3 300 308
- DE-A- 3 444 522
- DE-C- 3 529 118
- GB-A- 2 231 006

## Beschreibung

Die Erfindung bezieht sich auf eine Sperrvorrichtung für Schiebehebedächer für Kraftfahrzeuge entsprechend dem Oberbegriff des Patentanspruchs 1. Dabei sollen unter der Bezeichnung "Schiebehebedächer" auch Aufsatzschiebehebedächer verstanden werden, bei denen die Schiebehebedacheinheit auf die feste Dachfläche eines Kraftfahrzeugs aufgesetzt und daran befestigt ist.

Sperrvorrichtungen für Schiebehebedächer sind schon in verschiedenen Ausführungen (z.B. DE-A-3 300 308) bekannt. Sie haben die Aufgabe, Fehlfunktionen beim Antrieb des Schiebedeckels zu verhindern, indem sie den Schiebedeckel einerseits gegen Schiebebewegungen sperren, wenn der Schiebedeckel ausgestellt ist oder Ausstell- bzw. Einschwenkbewegungen durchführt, und andererseits für Schiebebewegungen freigeben, wenn der Schiebedeckel aus seiner Schließstellung in seine Verschiebstellung mit seiner Hinterkante geringfügig abgesenkt (Schiebehebedach) bzw. angehoben (Aufsatzschiebehebedach) ist. Typisch für derartige Sperrvorrichtungen ist es, daß sie aus ortsfesten Elementen und damit gesteuert zusammenwirkenden schiebebeweglichen Elementen bestehen. Die bekannten Vorrichtungen bedürfen im allgemeinen für eine einwandfreie Funktion genauer Justierung, sind häufig vielteilig und damit aufwendig aufgebaut, insbesondere wenn sie gelenkbewegliche Teile, wie zweiarmige Hebel, aufweisen.

Bei einer bekannten, dem Oberbegriff des Patentanspruchs 1 entsprechenden Sperrvorrichtung (EP-A-0 134 042) ist der Steuerstab (Zugstange) sowohl am vorderen als auch am hinteren Führungsschuh verschiebbar geführt und liegt dem hinteren Ende des hinteren Führungsschuhs mit einer Abbiegung oder Anstauchung nur zeitweilig an, nämlich im wesentlichen während der Öffnungsverschiebung des Schiebedeckels. Am vorderen Ende jeder Führungsschiene für die Führungsschuhe befindet sich ein vorderer Anschlag, der einteilig mit einem Klinkenhaken ausgebildet ist. Der Steuerstab ist im vorderen Führungsschuh an einem Nocken angebracht, der am vorderen Führungsschuh verschiebbar ist. Eine nur der Verriegelung dienende Verriegelungsfeder befindet sich auf dem Steuerstab zwischen dem Nocken und dem vorderen Führungsschuh. Der Nocken wirkt über einen daran angebrachten Nockenvorsprung mit einer Klinke zusammen, die schwenkbar am vorderen Führungsschuh gelagert ist. Diese Klinke wirkt mit dem vorderen Anschlag und dem Klinkenhaken als Verrieglungs- oder Sperrvorrichtung für den Schiebedeckel in dessen Schließstellung und seiner ausgestellten Lüfterstellung zusammen.

Der Erfindung liegt die Aufgabe zugrunde, eine Sperrvorrichtung der im Oberbegriff des Patentanspruchs 1 angegebenen Gattung bereitzustellen, die bei zuverlässiger Funktion von besonders einfacher Bauart ist.

Die gestellte Aufgabe wird durch die kennzeichnenden Merkmale des Patentanspruchs 1 gelöst.

Durch die Erfindung wird ein besonders einfacher und zuverlässiger Aufbau der Vorrichtung erzielt. Der an dem hinteren Führungsschuh starr befestigte Steuerstab liegt mit seinem freien Ende unmittelbar dem Rastelement an und ist bestimmend dafür, ob das Rastelement in der zugeordneten ortsfesten Rastausnehmung zur Verhinderung von Deckelverschiebungen gehalten wird oder daraus zur Freigabe von Deckelverschiebungen austreten kann. Dabei sorgt auf einfache Weise die Feder dafür, daß das Rastelement nach seiner Freigabe durch den Steuerstab durch Federkraft angetrieben aus der Rastausnehmung austritt. Im Rahmen der Erfindung ist aber auch eine Zwangssteuerung des Rastelements durch den Steuerstab in dem Sinne möglich, daß der Steuerstab aktiv das Rastelement aus der Rastausnehmung aushebt.

Vorteilhafte Aus- und Weiterbildungen der Erfindung sind in den Unteransprüchen angegeben und nachstehend erläutert.

Eine besonders einfache Ausbildung ergibt sich, wenn entsprechend Anspruch 2 die auf das Rastelement einwirkende Federkraft von einer Blattfeder aufgebracht wird, die zugleich die schwenkbare Verbindung des Rastelements mit dem vorderen Führungsschuh herstellt.

Die im Anspruch 3 angegebene vorteilhafte Ausgestaltung sorgt dafür, daß die während der Öffnungsverschiebung und natürlich auch bei allen Schiebezwischenstellungen außer Eingriff befindlichen Sperrelemente ohne erheblichen Kraftaufwand in der Sperrstellung aufeinander einwirken können, wobei das Rastelement zuverlässig und ausschließlich in Richtung der Rastausnehmung verlagert wird. Die angegebene Einwirkung des Steuerstabs auf das Rastelement wird durch die Merkmale des Anspruchs 4 noch verstärkt.

Die im Anspruch 5 angegebene vorteilhafte Anordnung der Führungsfläche am vorderen Führungsschuh sorgt bei allen Relativstellungen zwischen dem vorderen und dem hinteren Führungsschuh für eine abgestützte Verschiebeführungsanlage des Steuerstabs, ohne daß der Steuerstab das Rastelement überfahren kann, wenn dieses nicht der zugeordneten Rastausnehmung gegenübersteht.

Die Merkmale des Anspruchs 6 verdeutlichen, daß es für eine einwandfreie Steuerfunktion der Sperrvorrichtung im wesentlichen nur auf die angegebene Relativlänge des Steuerstabs ankommt, ohne daß umfangreiche Justierungen durchzuführen sind.

Ein Ausführungsbeispiel, das die Anwendung der Erfindung bei einem Aufsatzschiebehebedach betrifft, wird nachfolgend anhand der Zeichnungen näher erläutert. Darin zeigt:
- Fig. 1: die abgebrochene Draufsicht auf ein Kraftfahrzeugdach mit daran angebrachtem Aufsatzschiebehebedach bei in Schließstellung befindlichem Schiebedeckel,
- Fig. 2 bis 5: Schnittansichten entlang der Linien II-II bis V-V in Fig. 1,
- Fig. 6 bis 9: in ab- und aufgebrochenen unterschiedlichen Draufsichten Sperrelemente für die Verhinderung unerwünschter Schiebebewegungen des Schiebedeckels, dargestellt für verschiedene Deckelstellungen,
- Fig. 10: die ab- und aufgebrochene Draufsicht auf einen hinteren Führungsschuh und eine zugeordnete Führungskulisse,
- Fig. 11: eine abgebrochene Schnittansicht entlang der Linie XI-XI in Fig. 10 bei ausgeschwenktem Schiebedeckel,
- Fig. 12: eine der Fig. 11 ähnliche Schnittansicht bei geschlossenem Schiebedeckel,
- Fig. 13: eine den Fig. 11 und 12 ähnliche Schnittansicht bei zur Öffnungsverschiebung angehobenem Schiebedeckel,
- Fig. 13a: eine der Fig. 13 ähnliche Schnittansicht bei zur Öffnungsverschiebung abgesenktem Schiebedeckel eines (nicht aufgesetzten) Schiebehebedaches,
- Fig. 14: eine abgebrochene Schnittansicht entlang der Linie XIV-XIV in Fig. 11,
- Fig. 15: eine abgebrochene Schnittansicht entlang der Linie XV-XV in Fig. 1 und
- Fig. 16: eine vergrößerte Schnitteinzelheit entsprechend dem Ausschnittskreis XVI in Fig. 15.

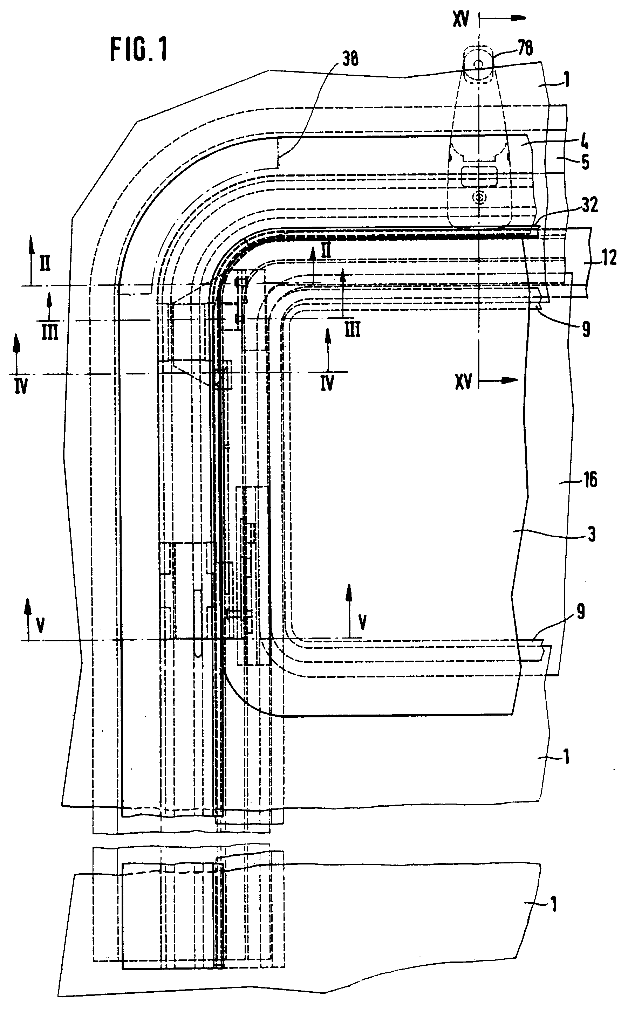

Auf die feste Dachfläche 1 einer Kraftfahrzeugkarosserie ist eine Schiebehebedacheinheit aufgesetzt. In der Dachfläche 1 befindet sich eine Dachöffnung 2, die mit einem Schiebedeckel 3 verschließbar ist, der als Glasdeckel ausgeführt ist, jedoch auch aus einem Metall oder Kunststoff gebildet sein kann. Der Schiebedeckel 3 überlappt in seiner in Fig. 1 dargestellten Schließstellung die Dachöffnung 2 allseits und ist zur Freigabe der Dachöffnung 2 über die hintere feste Dachfläche 1 verschiebbar. Der Schiebedeckel 3 ist vorn und seitlich von einem Außenrahmen 4 umgeben, an dem der Schiebedeckel 3 auf noch zu erläuternde Weise geführt ist und der als Montagerahmen der vormontierten Schiebehebedacheinheit dient. Der Aussenrahmen 4 ist nach hinten offen (Fig. 1) und erstreckt sich mit seinen seitlichen Schenkeln über den gesamten Öffnungsverschiebeweg des Schiebedeckels 3. Unterhalb der festen Dachfläche 1 ist ein dem Außenrahmen 4 gegenüberliegender Gegenrahmen 5 angebracht, der mit dem Außenrahmen 4 durch Schrauben 6 unter Zwischenlage eines Dichtstreifens 7 zwischen dem Außenrahmen 4 und der Dachfläche 1 fest verbunden ist. Der Gegenrahmen 5 umgibt die Dachöffnung 2 ebenfalls an drei Seiten und ist mit seinen freien Enden auch nach hinten gerichtet, wobei die Länge der seitlichen Schenkel der Länge der seitlichen Schenkel des Außenrahmens 4 angepaßt ist.

Die feste Dachfläche 1 ist an der Dachöffnung 2 mit einer umlaufend gleichen Aufkantung 8 versehen, auf welche ebenfalls umlaufend ein über seine gesamte Länge gleichbleibend ausgebildetes Abdichtprofil 9 aufgesteckt ist, das dem geschlossenen Schiebedeckel 3 von unten unter Herbeiführung einer umfänglichen Abdichtung der Dachöffnung 2 anliegt. Das Abdichtprofil ist in seinem oberen dem Schiebedeckel 3 zugekehrten Bereich mit einer seine Flexibilität erhöhenden Hohlkammer 10 versehen.

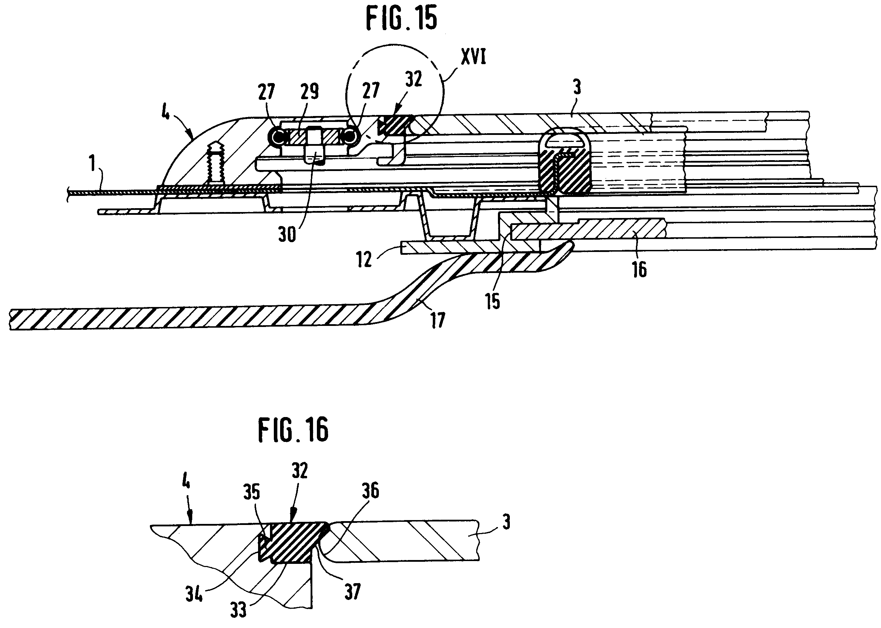

Der Gegenrahmen 5 ist im gezeigten Beispiel aus Blech profiliert und weist über seine gesamte Länge durchgehend ein gleichbleibendes Profil auf. In der Nähe seines Innenrandes befindet sich eine nach unten vorspringende Sicke 11, an welcher ein die Dachöffnung 2 ebenfalls an drei Seiten umgebender und mit seinen Enden nach hinten gerichteter Führungsrahmen 12 durch Klips 13 od.dgl. befestigt ist, welcher an seiner Innenseite mit einer nach oben zur Anlage an die feste Dachfläche 1 bestimmten Vorsprungsleiste 14 versehen ist, die etwa mit der Aufkantung 8 der Dachfläche 1 bündig liegt. Weiterhin ist der Führungsrahmen 12 in seiner gesamten Länge mit einer nach innen gerichteten Führungsnut 15 versehen, in welcher die seitlichen Ränder einer verschiebbaren Sonnenschutzplatte 16 geführt sind. Ist die Sonnenschutzplatte 16 zur vollständigen Abdeckung der Dachöffnung 2 ganz nach vorn geschoben, wie das in Fig. 15 angedeutet ist, so ist ihr vorderer Rand in das vordere Querteil der Führungsnut 15 eingeschoben. Wenn der Schiebedeckel 3 aus Metall hergestellt ist, kann auf eine Sonnenschutzplatte 16 verzichtet werden. Die Innenseite der Dachfläche 1 einschließlich des Gegenrahmens 5 und des Führungsrahmens 12 ist durch eine den oberen Fahrzeuginnenraum auskleidende Himmelschale 17 abgedeckt, die einen etwa der Dachöffnung 2 entsprechenden Ausschnitt aufweist.

Der Außenrahmen 4 ist einteilig mit integrierten Führungsschienen ausgebildet und weist einen nach unten und innen offenen Profilkanal 18 auf, von welchem zwei nebeneinander angeordnete und die Führungsschienen bildende Führungsnuten 19 und 20 ausgehen. Die Führungsnuten 19 und 20 haben einen geringen Höhenversatz, so daß unterhalb eines die Führungsnut 20 nach unten begrenzenden Profilflansches 21 ein seitlicher Durchtrittsspalt 22 zwischen der Dachfläche 1 und dem Profilflansch 21 für den Durchgriff der noch zu beschreibenden Führungsteile für den Schiebedeckel 3 gebildet ist. In den Führungsnuten 19 und 20 sind zu beiden Seiten des Schiebedeckels 3 jeweils ein vorderer Führungsschuh 23 und ein hinterer Führungsschuh 24 verschiebbar geführt.

Weiterhin befinden sich in dem Außenrahmen 4 oberhalb der Führungsnuten 19 und 20 für die Führungsschuhe 23 und 24 zwei nebeneinander angeordnete Führungskanäle 25 und 26 für darin drucksteif verschiebbar geführte und flexible Antriebskabel 27. An jeder Deckelseite ist eines der Antriebskabel 27 über einen Mitnehmer 28 kraftschlüssig mit einem hinteren Führungsschuh 24 verbunden. Die Führungskanäle 25 und 26 öffnen sich schlitzförmig zum Profilkanal 18 hin, so daß die Mitnehmer 28 durch die schlitzförmigen Öffnungen hindurch an die jeweiligen Antriebskabel 27 angreifen können. Im vorderen Querteil des Außenrahmens 4 ist im Bereich zwischen den beiden Antriebskabeln 27 ein Antriebsritzel 29 drehbar gelagert. Die Antriebskabel 27 sind in der für Kabelantriebe dieser Art üblichen Weise mit einer schraubenförmigen Drahtumfangswicklung versehen, welche zahnstangenähnlich mit der Verahnung des Antriebsritzels 29 eingreift, so daß Drehungen des Antriebsritzels 29 jeweils Verschiebungen der Antriebskabel 27, der damit verbundenen hinteren Führungsschuhe 24 und der damit verbundenen noch näher zu erläuternden Funktionsteile bewirken. Wie aus Fig. 15 weiterhin hervorgeht, ist mit dem Antriebsritzel 29 eine Antriebswelle 30 drehfest verbunden, die zu einer hand- oder motorbetätigten Antriebsvorrichtung führt.

Der Außenrahmen 4 ist an seinem Außenumfang zur festen Dachfläche 1 hin nach außen zu abgeschrägt bzw. angerundet, um einen strömungsgünstigen Übergang zur Dachfläche 1 zu bilden.

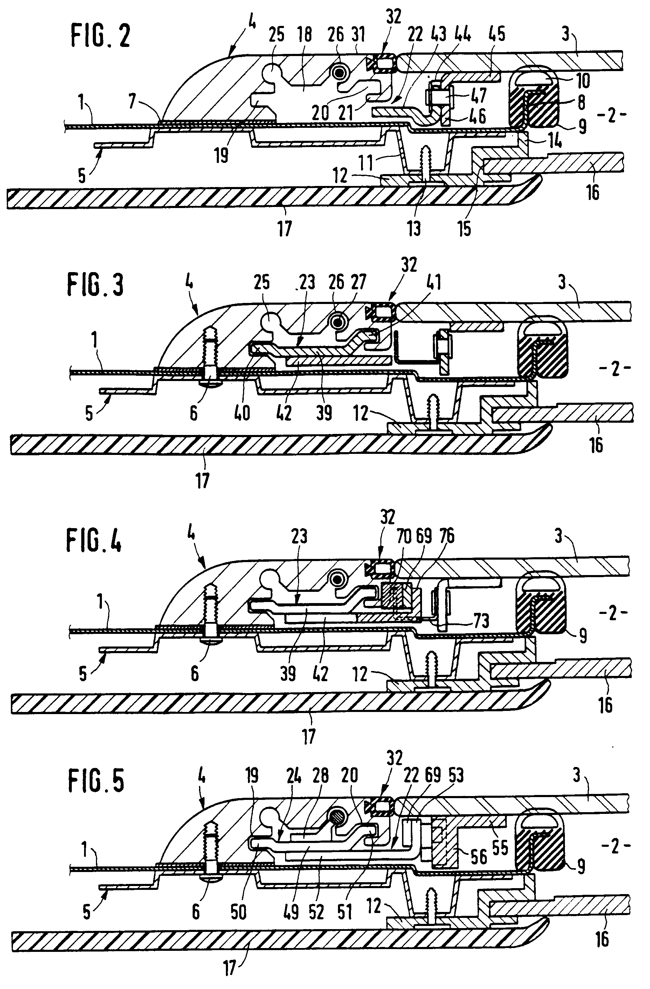

Der Außenrahmen 4 liegt mit seiner oberen Fläche 31 unter Zwischenlage einer Randspaltabdichtung 32 mit der oberen Flache des Schiebedeckels 3 bündig. Dadurch erhält das AufSatzschiebedach eine völlig glatte Außenform. Die Randspaltabdichtung umgibt den Deckel in seiner Schließlage an seinem vorderen und an seinen beiden Seitenrändern und erstreckt sich darüberhinaus über die volle Länge der seitlichen Schenkel des Außenrahmens 4. Zur Anbringung der Randspaltabdichtung 32 ist an der oberen Innenkante des Außenrahmens 4 eine Aufnahmenut 33 vorgesehen. In der senkrechten die Aufnahmenut 33 bildenden Fläche ist eine hinterschnittene Befestigungsnut 34 zur Aufnahme eines schwalbenschwanzförmigen Befestigungsvorsprungs 35 der Randspaltabdichtung 32 vorgesehen. Im Bereich der seitlichen Schenkel des Außenrahmens 4 ist die Randspaltabdichtung 32 als Hohlkammerprofil ausgebildet, wie aus den Fig. 2 bis 5 hervorgeht. Im Bereich des vorderen Querteils des Außenrahmens 4 ist die Randspaltabdichtung 32 dagegen ohne Hohlkammer als Vollprofil ausgebildet, so daß in diesem Bereich die elastische Verformbarkeit der Randspaltabdichtung 32 herabgesetzt ist. Weiterhin ist an diesem vorderen Bereich der Randspaltabdichtung 32 eine der abgerundeten Vorderkante 36 des Schiebedeckels 3 zugeordnete Schrägfläche 37 an dem Vollmaterialprofil vorgesehen. Wenn der Schiebedeckel 3 bei seiner Schließverschiebung auf diese Schrägfläche 37 auftrifft, so wird er dadurch geringfügig nach unten verlagert und damit dem Abdichtprofil 9 angepreßt. Wird der Schiebedeckel 3 mit seiner Hinterkante nach oben verschwenkt, wird die Vorderkante 36 entlang der Schrägfläche 37 nach unten geführt, wodurch eine Spaltbildung zwischen dem Außenrahmen 4 und der Deckelvorderkante 36 verhindert wird.

Der einteilige U-förmige Außenrahmen 4 kann zur Biegeerleichterung an seinen beiden vorderen Ecken mit Ausschnitten 38 versehen sein, von denen der linke vordere Ausschnitt in Fig.1 strichpunktiert angedeutet ist. Die Ausschnitte 38 sind durch nach dem Biegen angebrachte Formeinsätze geschlossen.

Für die nähere Erläuterung der Führungs- und Funktionsteile für den Schiebedeckel 3 wird entsprechend den beigefügten Zeichnungen ausschließlich auf die in Fahrtrichtung gesehen linke Seite des Schiebehebedaches Bezug genommen, weil die rechte Seite spiegelbildlich dazu ausgeführt ist.

Der vordere Führungsschuh 23 besitzt eine Führungsplatte 39 mit nach oben und außen abgebogenen Führungsvorsprüngen 40 und 41, welche verschiebbar in die zugeordneten Führungsnuten 19 bzw. 20 eingreifen. Die Führungsvorsprünge 40 und 41 können zur Reibungsminderung mit Gleitschuhen aus Kunststoff versehen sein (nicht dargestellt). Die Führungsplatte 39 ist fest mit einer unterlegten Grundplatte 42 verbunden, die an ihrem vorderen Ende mit einem Schwenklagervorsprung 43 den Durchtrittsspalt 22 berührungsfrei durchgreift und unterhalb des Schiebedeckels 3 mit einem senkrechten Lagerschenkel 44 endet. In diesem Bereich ist in der Nähe der Deckelvorderkante und mit Abstand von der Deckellängskante ein vorderer Deckelträger 45 mit der Unterseite des Schiebedeckels 3 beispielsweise durch Kleben fest verbunden. Der Deckelträger ist winkelförmig ausgebildet und ist mit einem nach unten weisenden Schenkel 46 über einen Schwenklagerzapfen 47 mit dem Lagerschenkel 44 schwenkbar verbunden, wie aus Fig. 2 hervorgeht. Die Schwenklagerzapfen 47 auf der linken und der rechten Seite des Schiebedeckels 3 bilden eine quer zur Schieberichtung verlaufende Schwenklagerachse für den Schiebedeckel 3.

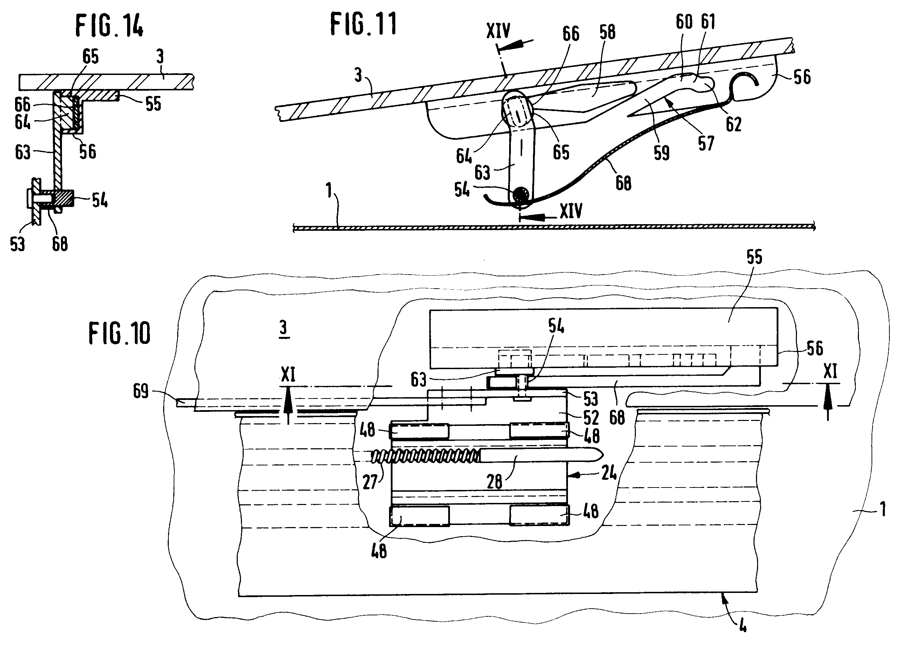

Wie aus Fig. 5 im Vergleich mit den Fig. 3 und 4 hervorgeht, ist der hintere Führungsschuh 24 dem vorderen Führungsschuh 23 entsprechend ausgebildet und besitzt ebenfalls eine Führungsplatte 49, die nach oben und außen zu Führungsvorsprüngen 50 und 51 abgebogen ist, welche verschiebbar in den zugeordneten Führungsnuten 19 bzw. 20 geführt sind. Auch hierbei können die Führungsvorsprünge 50 und 51 zur Reibungsherabsetzung mit Gleitschuhen 48 (Fig. 10) aus Kunststoff versehen sein. Mit der Führungsplatte 49 ist der bereits erwähnte Mitnehmer 28 fest verbunden. Auch hier ist die Führungsplatte 49 fest mit einer ihr unterlegten Grundplatte 52 verbunden. Die Grundplatte 52 greift durch den Durchtrittsspalt 22 berührungsfrei hindurch und endet unterhalb des Schiebedeckels 3 mit einer senkrecht nach oben gebogenen Befestigungsleiste 53. An dieser Befestigungsleiste 53 ist ein Führungsstift 54 befestigt.

In der Nähe der Deckelhinterkante und mit Abstand zur Deckellängskante befindet sich ein hinterer Deckelträger 55, welcher wiederum winkelförmig ausgebildet und an der Unterseite des Deckels durch zum Beispiel Kleben befestigt ist. Sein nach unten gerichteter Schenkel ist als Führungskulisse 56 ausgebildet, die auf noch zu beschreibende Weise mit dem Führungsstift 54 eingreift. Zur näheren Erläuterung der Führungskulisse und der mit ihr in Verbindung stehenden Teile wird nunmehr auf die Fig. 10 bis 14 Bezug genommen.

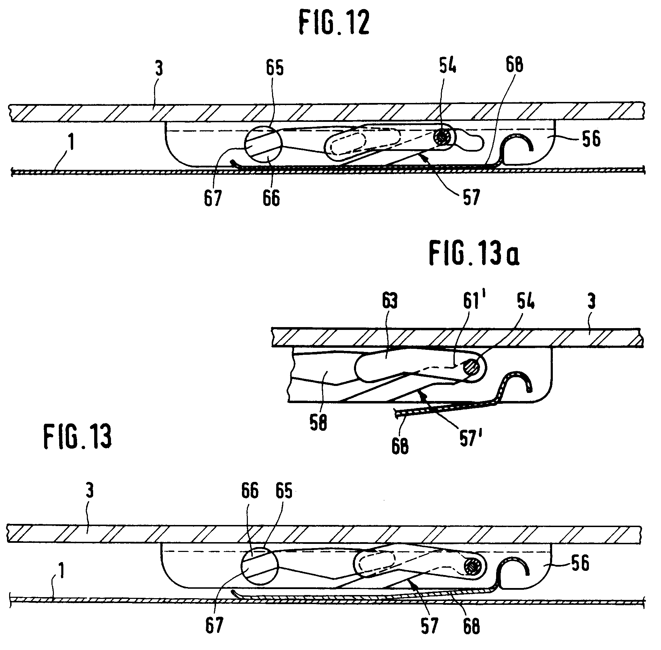

Wie am deutlichsten aus Fig. 11 hervorgeht, sind in der Führungskulisse 56 benachbart und teilweise überlappend hinten ein Führungsschlitz 57 für den Eingriff mit dem Führungsstift 54 und vorn eine langgestreckte besonders geformte Ausnehmung 58 vorgesehen. Der Führungsschlitz 57 umfaßt im wesentlichen vier Abschnitte, nämlich einen längeren gegenüber dem Schiebedeckel 3 von vorn nach hinten ansteigenden ersten geradlinigen Abschnitt 59, einen daran nach hinten gerichtet anschließenden kurzen etwa parallel zum Schiebedeckel 3 verlaufenden zweiten Abschnitt 60, einen daran anschließenden kurzen schräg nach unten gerichteten dritten Abschnitt 61 und einen kurzen daran nach hinten gerichtet anschließenden zum Schiebedeckel parallelen vierten Abschnitt 62. Der erste Abschnitt 59 ist der Ausstellbewegung des Schiebedeckels zugeordnet, der zweite Abschnitt 60 entspricht der Schließlage des Schiebedeckels 3, der dritte Abschnitt 61 ist einer vertikalen Verlagerung der Deckelhinterkante in Aufwärtsrichtung zugeordnet, und der vierte Abschnitt 62 schließlich nimmt den Führungsstift 54 bei der Öffnungsverschiebung des mit seiner Hinterkante etwas angehobenen Schiebedeckels 3 auf. In Fig. 12 befindet sich der Führungsstift 54 in dem zweiten Abschnitt 60, d.h. der Schiebedeckel 3 befindet sich in seiner Schließlage. In Fig. 13 befindet sich der Führungsstift 54 in dem vierten Abschnitt 62, d.h. diese Figur zeigt eine Stellung der Teile, die diese bei der Öffnungsverschiebung des Schiebedeckels vom Anfang bis zum Ende der Öffnungsverschiebung einnehmen. Der erste Abschnitt 59 des Führungsschlitzes 57 ist für den Austritt und den Eintritt des Führungsstiftes 54 aus der bzw. in die Führungskulisse 56 vorn geöffnet. In der Stellung des Schiebedeckels 3 gemäß Fig. 11 befindet sich der Führungsstift 54 außerhalb der Führungskulisse 56. Wie noch erläutert werden soll, bewirkt der Eingriff des Führungsstiftes 54 in den Führungsschlitz 57 der Führungskulisse 56 eine erste Phase der Ausstellbewegung bzw. eine zweite Phase der entgegengesetzten Bewegung, d.h. der Einschwenkbewegung.

Weiterhin ist zwischen dem hinteren Führungsschuh 24 und der Führungskulisse 56 ein Steuerhebel 63 vorgesehen, der einerseits an den hinteren Führungsschuh 24 angelenkt ist und andererseits dreh- und verschiebbar mit der Führungskulisse 56 verbunden ist. Dieser Steuerhebel 63 ist auf noch zu beschreibende Weise einer zweiten Phase der Ausstellbewegung bzw. einer ersten Phase der entgegengesetzt gerichteten Einschwenkbewegung zugeordnet, wobei während der Phasen der Wirksamkeit des Steuerhebels 63 der Eingriff zwischen der Führungskulisse 56 und dem Führungsstift 54 aufgehoben ist.

Im gezeigten Ausführungsbeispiel greift der Steuerhebel 63 zu seiner Anlenkung an den hinteren Führungsschuh 24 schwenkbar an den Führungsstift 54 an, wie die Fig. 11 und 14 verdeutlichen. Auf diese Weise ist der Steuerhebel 63 in einer zum Schiebedeckel 3 senkrechten Ebene schwenkbar gelagert. Am anderen Ende des Steuerhebels 63 ist dieser mit einem in die Führungskulisse 56 eingreifenden Führungsvorsprung 64 versehen. Der Führungsvorsprung 64 ist an zwei parallel gegenüberliegenden Seiten abgeflacht und besitzt eine an den beiden Enden abgerundete langgestreckte Gestalt. Bei geschlossenem Schiebedeckel 3, während der Öffnungsverschiebung, der Schließverschiebung, und der von dem Eingriff zwischen dem Führungsschlitz 57 und dem Führungsstift 54 gesteuerten Phasen der Ausstell- und Einschwenkbewegungen befindet sich der Führungsvorsprung 64 in der Ausnehmung 58, deren Formgebung durch die Abmessungen des Führungsvorsprungs 64 und den überlagerten Dreh- und Verschiebebewegungen des Führungsvorsprungs 64 in der Ausnehmung 58 bestimmt ist. Während dieser Verlagerungen des Führungsvorsprungs 64 innerhalb der Ausnehmung 58 befindet sich der Steuerhebel 63 in seinen funktionslosen Bewegungsphasen.

Die Ausnehmung 58 mündet an ihrem vorderen Ende in eine zylindrische Lageröffnung 65 ein, in welcher eine passende am Aussenumfang zylindrische Lagerscheibe 66 permanent angeordnet und drehbar gelagert ist. Die Einpassung der Lagerscheibe 66 in die Lageröffnung 65 ist aber derart, daß sich die Lagerscheibe in ihrer Lageröffnung 65 nicht unbeabsichtigt, d.h. ohne Eingriff mit dem Führungsvorsprung 64, drehen kann. In der Lagerscheibe 66 befindet sich ein diametral gerichteter, an beiden Seiten bis zum Außenumfang der Lagerscheibe 6 durchgehender Schlitz 67 zur passenden unverdrehbaren Aufnahme des Führungsvorsprungs 64 während der zweiten Phase der Ausstellbewegung bzw. der ersten Phase der entgegengesetzt gerichteten Einschwenkbewegung des Schiebedeckels 3.

Am hinteren Ende der Führungskulisse 56 ist eine Blattfeder 68 starr befestigt. Ihr freier nach vorn weisender Arm erstreckt sich parallel und unterhalb der Führungskulisse 56 und ist insgesamt in Richtung der Führungskulisse 56 vorgespannt. Daher liegt die Blattfeder 68 dem Führungsstift 54 unter Federkraft an, sobald dieser am Ende der ersten Phase der Ausstellbewegung aus dem Führungsschlitz 57 austritt. Dadurch wirkt die Blattfeder 68 durch das Systemspiel verursachten Klappergeräuschen entgegen.

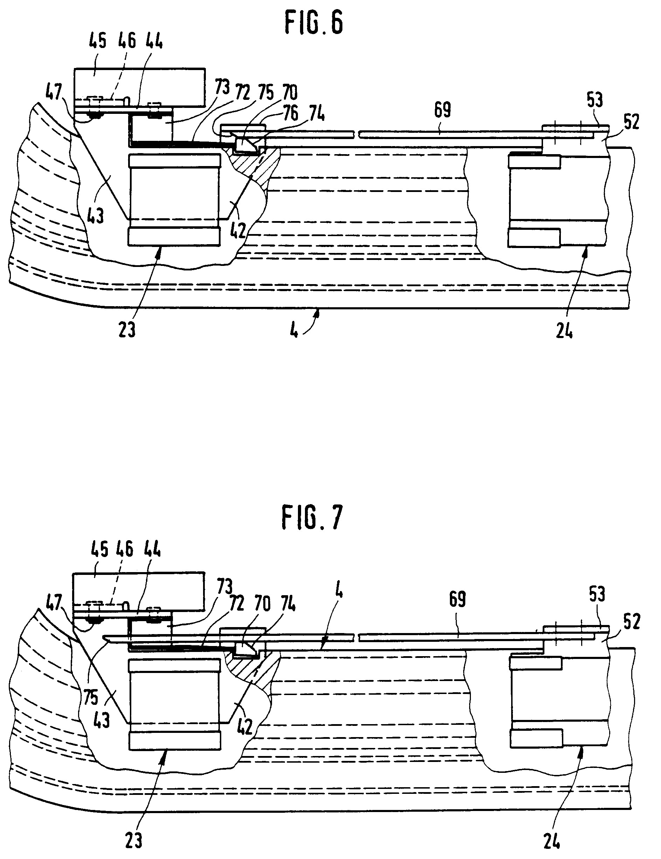

Zur näheren Erläuterung einer Sperrvorrichtung für unerwünschte Verschiebebewegungen des Deckels 3 wird nachfolgend auf die Fig. 6 bis 10 Bezug genommen. Die hier dargestellten Sperrelemente können in spiegelbildlicher Anordnung auf beiden Seiten der Dachöffnung vorgesehen sein. Sie umfassen einen am hinteren Führungsschuh 24 befestigten und am benachbarten vorderen Führungsschuh 23 verschiebbar geführten Steuerstab 69 sowie ein beweglich am vorderen Führungsschuh 23 angebrachtes, von dem Steuerstab 69 auf noch zu beschreibende Weise betätigtes Rastelement 70, welches einer Rastausnehmung 71 an der Führungsschiene für die Führungsschuhe 23 und 24 zugeordnet ist. Im gezeigten Beispiel befindet sich die Rastausnehmung 71 in der dem Schiebedeckel 3 zugekehrten Fläche des Außenrahmens 4.

Der Steuerstab 69 ist an der Befestigungsleiste 53 der Grundplatte 52 des hinteren Führungsschuhs 24 starr befestigt. Das Rastelement 70 ist schwenkbar am vorderen Führungsschuh 23 befestigt, im gezeigten Beispiel mittels einer Blattfeder 72, durch welche das Rastelement 70 ständig in Richtung des Austretens aus der Rastausnehmung 71 belastet ist. Die Blattfeder 72 ist Bestandteil eines am Lagerschenkel 44 des Schwenklagervorsprungs 43 befestigten Federhalters 73. Das Rastelement 70 weist an seinem dem hinteren Führungsschuh 24 zugekehrten Ende eine Auflaufschräge 74 für das freie Ende des Steuerstabs 69 auf, welche so gerichtet ist, daß das ihr zugeordnete Ende des Steuerstabs 69 das Rastelement 70 in Verlagerungsrichtung auf den Außenrahmen 4 zu belastet. Auch das Ende des Steuerstabs 69 ist mit einer Schrägfläche 75 versehen, die der Auflaufschräge 74 am Rastelement 70 zugeordnet ist und zu dieser parallel ausgerichtet ist.

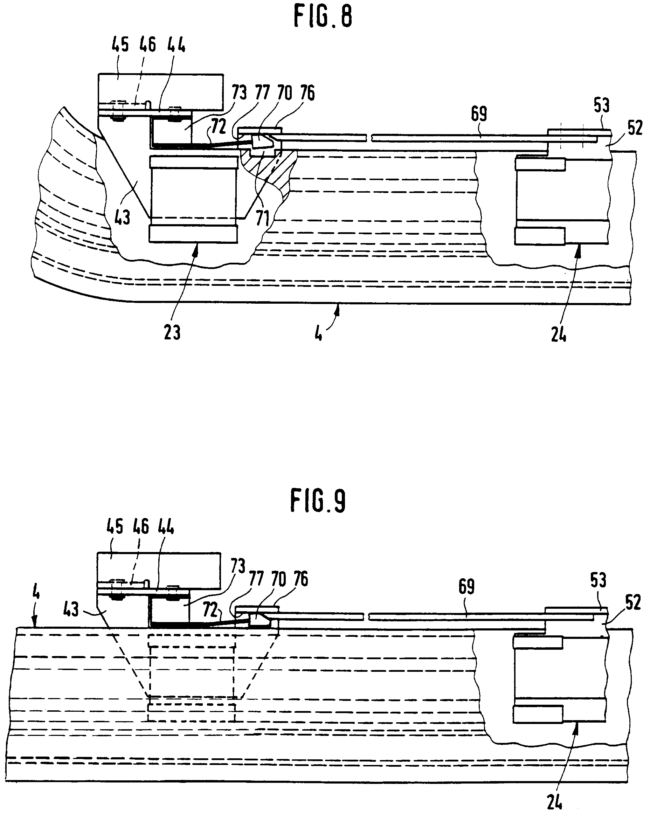

Am hinteren Ende der Grundplatte 42 des vorderen Führungsschuhs 23 befindet sich eine rechtwinklig nach oben abgebogene Aufkantung 76, die innen eine Führungsfläche 77 für den ihr in jeder Schiebedeckelstellung anliegenden Steuerstab 69 bildet. Der Abstand der Führungsfläche 77 zu der benachbarten parallelen Fläche des Außenrahmens 4 ist so gewählt, daß dieser Abstand etwa der Querabmessung des Rastelements 70 entspricht, wie am besten aus Fig. 9 hervorgeht. Das Summenmaß aus dem vorerwähnten Abstand und der Tiefe der Rastausnehmung 71 entspricht etwa der Querabmessung des Rastelements 70 zuzüglich der Dicke des Steuerstabs 69, was die Fig. 6 und 7 verdeutlichen. Bei geschlossenem Schiebedeckel (Fig. 6) befindet sich das Rastelement 70 in der Rastausnehmung 71 und wird darin von dem sich an der Führungsfläche 77 abstützenden Steuerstab 69 gehalten. Auch in ausgestellten Lagen des Schiebedeckels wird das Rastelement 70 durch den Steuerstab 69 in der Rastausnehmung 71 gehalten, wie aus Fig. 7 hervorgeht. Nach Anheben der Hinterkante des Schiebedeckels 3 (Aufsatzschiebehebedach) bzw. nach Absenken der Hinterkante des Schiebedeckels 3 (Schiebehebedach) hat der Steuerstab 69 das Rastelement 70 freigegeben, so daß dieses aus der Rastausnehmung 71 austreten kann, wie Fig. 8 veranschaulicht. Nach Aufhebung der Verrastung kann der Schiebedeckel ausgehend von der in Fig. 8 dargestellten Lage nach hinten verschoben werden. Bei Verschiebung des Schiebedeckels 3 in Richtung seiner Schließlage stützt sich die Schrägfläche 75 des Steuerstabs 69 an der Auflaufschräge 74 des Rastelements 70 ab, kann jedoch das Rastelement 70 nicht verlagern, weil dieses an der zugekehrten Fläche des Außenrahmens 4 gleitet. Dabei kann aber der Steuerstab 69 das Rastelement 70 wegen seiner Anlage an der Führungsfläche 77 auch nicht überfahren. Der durch das Antriebskabel 27 in Schließverschieberichtung angetriebene hintere Führungsschuh 24 verschiebt daher mittels des Steuerstabs 69 den vorderen Führungsschuh 23 und damit den Schiebedeckel 3. Die Schließverschiebung wird auf diese Weise fortgesetzt, bis das Rastelement 70 an der Rastausnehmung 71 angelangt ist und nun von dem Steuerstab 69 in diese hinein verlagert wird.

Wie ersichtlich ist, ist die Länge des Steuerstabs 69 nach Maßgabe des Abstands zwischen dem Rastelement 70 des vorderen Führungsschuhs 23 und dem hinteren Führungsschuh 24 so zu bemessen, daß der Steuerstab 69 das Rastelement 70 zur Öffnungsverschiebung des Schiebedeckels 3 vollständig freigibt (Fig. 8), dem Rastelement 70 bei Schließverschiebung jedoch mit seinem Ende kraftschlüssig anliegt (Fig. 9).

Nachfolgend wird die Wirkungsweise der vorstehend beschriebenen Schiebehebedachkonstruktion näher erläutert. In der Schließstellung des Schiebedeckels 3 (Fig. 6, 12) befindet sich das Rastelement 70 in der Rastausnehmung 71, und der Führungsstift 54 befindet sich in dem zweiten Abschnitt 60 des Führungsschlitzes 57. Soll ausgehend von dieser Schließstellung eine Öffnungsverschiebung des Schiebedeckels 3 erfolgen, so werden durch entsprechende Drehbetätigung des Antriebsritzels 29 (Fig. 15), beispielsweise mittels der in Fig. 1 dargestellten Handkurbel 78, die Antriebskabel 27 so in ihren Führungskanälen 25 und 26 verschoben, daß für die hier betrachtete Deckelseite (Fig. 10) der hintere Führungsschuh 24 nach hinten (nach rechts) verlagert wird. Hierbei verhindert der Steuerstab 69 das Austreten des Rastelements 70 aus der Rastausnehmung 71 so lange, bis der Führungsstift 54 die Hinterkante des Schiebedeckels 3 durch Gleiten im dritten Abschnitt 61 des Führungsschlitzes 57 zum mindestens partiellen Abheben des Schiebedeckels 3 von dem Abdichtprofil 9 nach oben angehoben hat. Bei der Kulissenanordnung gemäß Fig. 13a entspricht dieser Bewegungsablauf bei einem nicht auf die feste Dachfläche aufgesetzten Schiebehebedach der Bewegung des Führungsstiftes 54 in dem Abschnitt 61' des Führungsschlitzes 57'. Hierbei wird der Schiebedeckel 3 mit seiner Hinterkante abgesenkt, um nachfolgend unter die feste Dachfläche verschoben werden zu können.

Bei Fortsetzung des Verschiebeantriebs des hinteren Führungsschuhs 24 in der angegebenen Richtung gelangt der Führungsstift 54 in den vierten Abschnitt 62 des Führungsschlitzes 57, und der Steuerstab 69 gibt das Rastelement 70 frei, so daß dieses aus der Rastausnehmung 71 austreten kann. Der Schiebedeckel ist nunmehr für eine weitere Öffnungsverschiebebewegung freigegeben. Bei der Schließverschiebung erfolgen die beschriebenen Vorgänge in umgekehrter Reihenfolge.

Soll nunmehr der Schiebedeckel 3 ausgehend von seiner Schließstellung (Fig. 6, 12) in eine Lüftungsstellung mit seiner Hinterkante nach oben ausgestellt werden, so werden die Antriebskabel 27 auf die beschriebene Weise in Gegenrichtung verschiebend angetrieben, so daß für die betrachtete Deckelseite (Fig. 10) der hintere Führungsschuh 24 nach vorn (nach links) verschoben wird. Hierbei hält der Steuerstab 69 das Rastelement 70 in der Rastausnehmung 71, wodurch der vordere Führungsschuh 23 und der mit diesem verbundene Schiebedeckel 3 gegen Verschieben gesichert ist. Der Führungsstift 54 gelangt aus dem zweiten Abschnitt 60 in den ersten Abschnitt 59 des Führungsschlitzes 57. Da sich der Führungsstift 54 stets nur auf einer geradlinigen parallel zur durch die Führungsnuten 19 und 20 gebildeten Führungsschiene verlaufenden Bahn bewegen kann, der erste Abschnitt 59 des Führungsschlitzes 57 jedoch schräg verläuft, wird der Schiebedeckel 3 durch die Führungsstifte 54 hinten angehoben. Diese erste Phase der Ausstellbewegung dauert an, bis der Führungsstift 54 am Ende des ersten Abschnitts 59 angelangt ist und aus diesem austritt. Bis zu diesem Zeitpunkt ist der Steuerhebel 63 inaktiv gewesen und wurde durch den Führungsstift 54 lediglich unter zunehmender Verschwenkung im Uhrzeigersinn nach vorn mitgenommen, wobei sein Führungsvorsprung 64 innerhalb der Ausnehmung 58 verlagert wurde. Am Ende dieser Verlagerungsbewegung ist der Führungsvorsprung 64 in den Schlitz 67 der Lagerscheibe 66 eingetreten. Bei Austritt des Führungsstiftes 54 aus dem ersten Abschnitt 59 befindet sich der Führungsvorsprung 64 vollständig in dem Schlitz 67, so daß sich nunmehr für die zweite Phase der Ausstellbewegung der Führungsvorsprung 64 zusammen mit der von ihm drehend mitgenommenen Lagerscheibe 66 in der Lageröffnung 65 drehen kann. Eine weitere Bewegung des Führungsstiftes 54 in der angegebenen Richtung führt nunmehr zu einer weiteren Verschwenkung des den Schiebedeckel 3 ausstellenden Steuerhebels 63, bis etwa die in Fig. 11 dargestellte maximale Ausstellage erreicht ist. Beim Einschwenken des Schiebedeckels erfolgt der beschriebene Bewegungsablauf in umgekehrter Reihenfolge, wobei auch hierbei das Rastelement 70 von dem Steuerstab 69 in der Rastausnehmung 71 zur Sicherung des Schiebedeckels gegen Verschieben festgehalten wird. Beim Verschwenken des Schiebedeckels 3 verschwenkt dieser um die von den Schwenklagerzapfen 47 gebildete Schwenkachse.

Die beschriebene Sonnenschutzplatte 16 ist von den Verschiebebewegungen des Schiebedeckels 3 unabhängig und kann in jeder Stellung des Schiebedeckels 3 unabhängig verschoben werden.

Wie insbesondere die Fig. 11 bis 13 verdeutlichen, wird durch die Anordnung des Steuerhebels 63 mit seinem Drehlager in der Führungskulisse 56 vorteilhaft erreicht, daß ein zum vollständigen Ausstellen der Deckelhinterkante langer Verschiebeweg des hinteren Führungsschuhs 24 in Vorwärtsrichtung und damit verbunden ein langgestreckter geneigter erster Abschnitt eines Führungsschlitzes teilweise ersetzt wird durch eine Hebelausstellung. Dadurch kann der die erste Phase der Ausstellbewegung bewirkende Führungsschlitz 57 erheblich verkürzt ausgebildet werden. Im Ergebnis wird durch diese Anordnung die Abstützung des ausgestellten Schiebedeckels verbessert, weil die hintere Abstützung näher an die Deckelhinterkante heranrückt, wodurch die Abstützbasis auch des voll ausgestellten Schiebedeckels vergleichsweise groß ist.

Bei der beschriebenen Aufsatzschiebehebedachkonstruktion befinden sich alle die Führungsschuhe 23, 24 mit dem Schiebedeckel 3 verbindenden Funktionsteile der Dachkonstruktion zu beiden Seiten der Dachöffnung 2 bei geschlossenem Schiebedeckel jeweils geschützt innerhalb eines Raums, der durch den Außenrahmen 4, der Innenfläche des Schiebedeckels 3, der Aufkantung 8 mit Abdichtprofil 9 und der Oberseite der festen Dachfläche 1 begrenzt ist.

Die Ausstell- oder Hebefunktion der beschriebenen Aufsatzschiebehebedachkonstruktion wird dadurch gewährleistet, daß alle an den Deckelschwenkbewegungen teilnehmenden Funktionsteile, d.h. die Führungskulissen 56, die Steuerhebel 63, die Blattfedern 68 und die Deckelträger 45, 55 nicht über die Seitenränder des Schiebedeckels 3 vorstehen, sondern dahinter zurückspringend angeordnet sind.

## Patentansprüche

1. Sperrvorrichtung für Schiebehebedächer für Kraftfahrzeuge mit einem starren Schiebedeckel (3), der mit vorderen und hinteren Führungsschuhen (23, 24) an seitlich im Dachausschnitt (2) befestigten Führungsschienen geführt und über an den vorderen Führungsschuhen (23) angebrachte Schwenklager (47) um eine waagerechte, quer zur Schieberichtung verlaufende Achse schwenkbar gelagert ist, wobei Sperrelemente vorgesehen sind, die Schiebebewegungen des Schiebedeckels (3) während der Schwenkbewegungen desselben verhindern, deren Sperreingriff bei Schiebebewegungen jedoch aufgehoben ist und die mindestens an einer Seite des Schiebedeckels (3) einen den vorderen Führungsschuh (23) mit dem hinteren Führungsschuh (24) verbindenden, am vorderen Führungsschuh (23) verschiebbar geführten, Steuerstab (69), ein schwenkbar an vorderen Führungsschuh (23) angebrachtes Rastelement (70), das mittels des Steuerstabs (69) betätigt wird, und eine dem Rastelement (70) zugeordnete Rastausnehmung (71) an der Führungsschiene umfassen, und wobei der hintere Führungsschuh (24) den Steuerstab (69) mit Einleitung einer Öffnungsschiebebewegung zwangsläufig mitnimmt und damit den Eingriff zwischen dem Rastelement (70) und der Rastausnehmung (71) zur Freigabe der Öffnungsverschiebung des Schiebedeckels (3) aufhebt, dadurch gekennzeichnet, daß der Steuerstab (69) an dem hinteren Führungsschuh (24) starr befestigt ist, mit seinem freien Ende unmittelbar dem Rastelement (70) anliegend dieses in die Rastausnehmung (71) verlagert, wenn die Schließverschiebung des Schiebedeckels (3) beendet ist, und das Rastelement (70) bei geschlossenem Schiebedeckel und auch in ausgestellten Lagen in der Rastausnehmung (71) hält, zur Öffnungsverschiebung das Rastelement (70) aber vollständig freigibt, und daß das Rastelement (70) ständig durch eine Feder (68) in Richtung des Austretens aus der Rastausnehmung (71) belastet ist.

2. Sperrvorrichtung nach Anspruch 1, dadurch gekennzeichnet, daß die Feder (68) als Blattfeder ausgebildet ist, über welche das Rastelement (70) schwenkbar an dem vorderen Führungsschuh (23) befestigt ist.

3. Sperrvorrichtung nach Anspruch 1 oder 2, dadurch gekennzeichnet, daß das Rastelement (70) an seinem dem hinteren Führungsschuh (24) zugekehrten Ende eine Auflaufschräge (74) für das freie Ende des Steuerstabs (69) aufweist, welche so gerichtet ist, daß das ihr anliegende Ende des Steuerstabs (69) des Rastelements (70) in Verlagerungsrichtung auf die Führungsschiene (Außenrahmen 4) zu belastet.

4. Sperrvorrichtung nach Anspruch 3, dadurch gekennzeichnet, daß auch das Ende des Steuerstabs (69) mit einer Schrägfläche (75) versehen ist, die der Auflaufschräge (74) am Rastelement (70) zugeordnet und zu dieser parallel ausgerichtet ist.

5. Sperrvorrichtung nach einem der Ansprüche 1 bis 4, dadurch gekennzeichnet, daß am vorderen Führungsschuh (23) eine Führungsfläche (77) für den Steuerstab (69) angebracht ist, welcher der Steuerstab (69) in jeder Schiebedeckelstellung anliegt und deren Abstand von der benachbarten parallelen Fläche der Führungsschiene (Außenrahmen 4) etwa der Querabmessung des Rastelements (70) entspricht, wobei das Summenmaß aus dem Abstand und der Tiefe der Rastausnehmung (71) etwa der der Querabmessung des Rastelements (70) zuzüglich der Dicke des Steuerstabs (69) entspricht.

6. Sperrvorrichtung nach einem der Ansprüche 1 bis 5, dadurch gekennzeichnet, daß die Länge des Steuerstabs (69) nach Maßgabe des Abstands zwischen dem Rastelement (70) des vorderen Führungsschuhs (23) und dem hinteren Führungsschuh (24) so bemessen ist, daß der Steuerstab (69) das Rastelement (70) zur Öffnungsverschiebung des Schiebedeckels (3) vollständig freigibt, dem Rastelement (70) bei Schließverschiebung jedoch mit seinem Ende kraftschlüssig anliegt.

## Claims

1. Locking device for sliding-lifting roofs for motor vehicles having a rigid sliding lid (3), which is guided with forward and rear guide shoes (23, 24) on guide rails fixed laterally to the roof opening (2) and is pivotally journalled by pivot bearings (47) mounted on the forward guide shoes (23) about a horizontal axis extending transversely to the direction of sliding, wherein locking elements are provided which prevent sliding movements of the sliding lid (3) during its tilting movements, the locking engagement of which, however, is cancelled during sliding movements, and which comprise on at least one side of the sliding lid (3) a control rod (69) connecting the forward guide shoe (23) with the rear guide shoe (24), slidably guided on the forward guide shoe (23), a detent element (70), attached pivotally to the forward guide shoe (23) and actuated by the control rod (69), and a detent recess (71), associated with the detent element (70), on the guide rail, and wherein the rear guide shoe (24) on initiation of a sliding movement in the opening direction positively takes along the control rod (69) and with that cancelling the engagement between the detent element (70) and the detent recess (71) to allow the sliding movement of the sliding lid (3) in the opening direction, **characterized in that** the control rod (69) is fixedly secured to the rear guide shoe (24), with its free and directly resting against the detent element (70) is shifting the detent element into the detent recess (71), when the sliding movement of the sliding lid (3) in the closing direction is finished, and holding the detent element (70) in the detent recess (71), when the sliding lid is closed and in lifted positions also, but releasing the detent element completely for movement in the opening direction, and that the detent element (70) is continually biased by a spring (68) in the direction of moving out of the detent recess (71).

2. Locking device according to Claim 1, **characterized in that** the spring (68) is constructed as a leaf spring, by which the detent element (70) is pivotally fixed to the forward guide shoe (23).

3. Locking device according to Claim 1 or 2, **characterized in that** the detent element (70) possesses, at its end facing towards the rear guide shoe (24), a run-on slope (74) for the free end of the control rod (69), which is so orientated that the end of the control rod (69) bearing against it loads the detent element (70) in the direction of displacement towards the guide rail (outer frame 4).

4. Locking device according to Claim 3, **characterized in that** the end of the control rod (69) also is provided with an inclined surface (75), which is associated with the run-on slope (74) on the detent element (70) and is orientated parallel thereto.

5. Locking device according to one of Claims 1 to 4, **characterized in that**, on the forward guide shoe (23), a guide surface (77) for the control rod (69) is provided, against which the control rod (69) bears in every displaced position of the lid and the distance of which from the adjacent, parallel surface of the guide rail (outer frame 4) is approximately equal to the transverse dimension of the detent element (70), wherein the dimensional sum of the distance and of the depth of the detent recess (71) being approximately equal to the transverse dimension of the detent element (70) plus the thickness of the control rod (69).

6. Locking device according to one of Claims 1 to 5, **characterized in that** the length of the control rod (69) is so dimensioned, in accordance with the distance between the detent element (70) of the forward guide shoe (23) and the rear guide shoe (24), that the control rod (69) completely releases the detent element (70) for the opening displacement of the sliding lid (3), but bears forcetransmittingly with its end against the detent element (70) during the closure displacement.

## Revendications

1. Dispositif de verrouillage pour des toits coulissants et relevables pour des véhicules automobiles, comportant un couvercle coulissant rigide (3), guidé par des patins de guidage avant et arrière (23, 24) sur des rails de guidage fixés latéralement dans la découpe de toit (2) et monté en basculement via des éléments de basculement (47) agencés sur les patins de guidage avant (23) autour d'un axe horizontal qui s'étend transversalement à la direction de coulissement, dans lequel sont prévus des éléments de verrouillage qui empêchent les mouvements de coulissement du couvercle coulissant (3) pendant les mouvements de basculement de celui-ci, mais dont l'engagement de verrouillage est annulé pendant les mouvements de coulissement, et qui comportent au moins une barre de commande (69) reliant le patin de guidage avant (23) au patin de guidage arrière (24) et guidée en déplacement sur le patin de guidage avant (23), un élément d'enclenchement (70) fixé en basculement sur le patin de guidage avant (23) et actionné au moyen de la barre de commande (69), et comportant un évidement d'enclenchement (71) associé à l'élément d'enclenchement (70) sur le rail de guidage, et dans lequel le patin de guidage arrière (24) entraîne à force la barre de commande (69) en provoquant un mouvement d'ouverture par coulissement et annule ainsi l'engagement entre l'élément d'enclenchement (70) et l'évidement d'enclenchement (71) pour libérer le mouvement d'ouverture du couvercle coulissant (3), caractérisé en ce que la barre de commande (69) :
- est fixée rigidement sur le patin de guidage arrière (24),
- déplace par son extrémité libre, en étant appuyée directement contre l'élément d'enclenchement (70), celui-ci jusque dans l'évidement d'enclenchement (71), lorsque le déplacement de fermeture du couvercle coulissant (3) est terminé, et
- maintient l'élément d'enclenchement (70) dans l'évidement d'enclenchement (71) lorsque le couvercle coulissant est fermé et également dans les positions déployées,
- mais libère entièrement l'élément d'enclenchement (70) pour le déplacement d'ouverture,
et en ce que l'élément d'enclenchement (70) est constamment chargé par un ressort (68) en direction de la sortie hors de l'évidement d'enclenchement (71).

2. Dispositif de verrouillage selon la revendication 1, caractérisé en ce que le ressort (68) est réalisé sous forme d'un ressort à lame via lequel l'élément d'enclenchement (70) est fixé en basculement sur le patin de guidage avant (23).

3. Dispositif de verrouillage selon l'une ou l'autre des revendications 1 et 2, caractérisé en ce que l'élément d'enclenchement (70) présente à son extrémité orientée vers le patin de guidage arrière (24) une pente de montée (74) pour l'extrémité libre de la barre de commande (69), qui est dirigée de telle sorte que l'extrémité de la barre de commande (69) de l'élément d'enclenchement (70), extrémité qui s'appuie contre cette pente, exerce une sollicitation en direction de déplacement vers le rail de guidage (cadre extérieur 4).

4. Dispositif de verrouillage selon la revendication 3, caractérisé en ce que l'extrémité de la barre de commande (69) est également pourvue d'une surface oblique (75) qui est associée à la pente de montée (74) sur l'élément d'enclenchement (70) et qui est dirigée parallèlement à celle-ci.

5. Dispositif de verrouillage selon l'une quelconque des revendications 1 à 4, caractérisé en ce qu'il est prévu sur le patin de guidage avant (23) une surface de guidage (77) pour la barre de commande (69), contre laquelle s'appuie la barre de commande (69) dans chaque position du couvercle coulissant, et dont la distance par rapport à la surface voisine parallèle du rail de guidage (cadre extérieur 4) correspond approximativement à la dimension transversale de l'élément d'enclenchement (70), dans lequel la dimension totale de la distance et de la profondeur de l'évidement d'enclenchement (71) correspond approximativement à la dimension transversale de l'élément d'enclenchement (70), additionnée de l'épaisseur de la barre de commande (69).

6. Dispositif de verrouillage selon l'une quelconque des revendications 1 à 5, caractérisé en ce que la longueur de la barre de commande (69) est dimensionnée selon la dimension de la distance entre l'élément d'enclenchement (70) du patin de guidage avant (23) et le patin de guidage arrière (24), de telle sorte que la barre de commande (69) libère entièrement l'élément d'enclenchement (70) pour le déplacement d'ouverture du couvercle coulissant (3), mais qu'elle s'appuie par son extrémité en coopération de forces contre l'élément d'enclenchement (70) lors du déplacement de fermeture.
